Europäisches Patentamt

European Patent Office

Office européen des brevets

(11) Veröffentlichungsnummer: **0 359 045**

**A2**

(12) **EUROPÄISCHE PATENTANMELDUNG**

(21) Anmeldenummer: **89116073.1**

(22) Anmeldetag: **31.08.89**

(51) Int. Cl.5 **C08F 8/44**

(30) Priorität: **08.09.88 DE 3830535**

(43) Veröffentlichungstag der Anmeldung:
**21.03.90 Patentblatt 90/12**

(84) Benannte Vertragsstaaten:
**BE DE ES FR IT NL**

(71) Anmelder: **BASF Aktiengesellschaft**
**Carl-Bosch-Strasse 38**
**D-6700 Ludwigshafen(DE)**

(72) Erfinder: **Koehler, Gernot, Dr.**
**Calvinstrasse 7 c**
**D-6520 Worms 1(DE)**
Erfinder: **Schmidt-Thümmes, Jürgen**
**Aitholzweg 25**
**D-6700 Ludwigshafen(DE)**
Erfinder: **Hasenbein, Norbert, Dr.**
**Neuoettinger Strasse 4**
**D-6716 Dirmstein(DE)**
Erfinder: **Schlemmer, Lothar**
**Duisbergstrasse 1 a**
**D-6701 Maxdorf(DE)**
Erfinder: **Dietsche, Wolfram, Dr.**
**Albrecht-Duerer-Ring 34 b**
**D-6710 Frankenthal(DE)**

(54) **Verfahren zur Herstellung von wässrigen Synthesewachsdispersionen.**

(57) Herstellung von wäßrigen Synthesewachsdispersionen, die als wesentlichen Bestandteil in der Festsubstanz teilweise oder vollständig neutralisierte Copolymere aus $C_2$- bis $C_4$-Olefinen und ungesättigten Mono- oder Dicarbonsäuren oder Dicarbonsäureanhydriden enthalten, durch Neutralisieren und Dispergieren der Festsubstanz in wäßrigem Medium oberhalb des Schmelzpunktes der Copolymeren, indem man die Vorgänge des Neutralisierens und des Dispergierens in einem oder mehreren hintereinandergeschalteten Extrudern vornimmt.

## Verfahren zur Herstellung von wäßrigen Synthesewachsdispersionen

Die vorliegende Erfindung betrifft ein verbessertes Verfahren zur Herstellung von wäßrigen Synthesewachsdispersionen, die als wesentlichen Bestandteil in der Festsubstanz teilweise oder vollständig neutralisierte Copolymere (I) enthalten, die aus

A) $C_2$- bis $C_4$-Olefinen und

B) ungesättigten Mono- oder Dicarbonsäuren oder Dicarbonsäureanhydriden oder Gemischen dieser Monomeren aufgebaut sind, durch Neutralisieren und Dispergieren der Festsubstanz in wäßrigem Medium oberhalb des Schmelzpunktes der Copolymeren (I).

Da die Festsubstanzen dieser Dispersionen wachsartigen Charakter haben, werden sie im folgenden als "Synthesewachse" oder kurz "Wachse" bezeichnet. Entsprechend wird die wesentliche Komponente der Wachse, das Copolymer (I), nach den bekanntesten Vertretern dieser Stoffklasse, nämlich den vollständig oder partiell neutralisierten Ethylen-Acrylsäure-Copolymeren als "E-AS-Wachs" definiert.

Die Wachse dienen bekanntlich als Konservierungsmittel, z.B. zum Schutz für metallische und lackierte Oberflächen, und als Fußbodenpflegemittel.

Zur Herstellung der E-AS-Wachse werden Ethylen und Acrylsäure oder Methacrylsäure oder andere Monomere der Komponenten A und B in der Regel nach den Methoden der Substanzpolymerisation polymerisiert, wonach die Carboxylgruppen des erhaltenen Copolymerisats (I) gänzlich oder zum Teil mit einer Base neutralisiert werden. Die so hergestellten E-AS-Wachse haben selbst-emulgierende Eigenschaften und lassen sich deshalb in wäßrige Dispersionen überführen.

Nach der DE-A 35 12 564 nimmt man die Dispergierung in einem Emulgier-Autoklaven vor. Erforderlich ist hierzu eine Temperatur von 140 bis 160°C und ein Druck von 4 bis 6 bar. Das E-AS-Wachs als Ausgangsmaterial wird mit der nötigen Menge Wasser, der entsprechenden Menge Base und gegebenenfalls mit Hilfsmitteln bei den oben angegebenen Bedingungen unter Rühren dispergiert. Nach 1 bis 3 Stunden wird der Autoklaveninhalt unter fortgesetztem Rühren auf Raumtemperatur abgekühlt, wonach die fertige Wachsdispersion abgelassen wird.

Dieses Verfahren ist sehr zeit- und arbeitsaufwendig. Da die Herstellung der Ethylencopolymeren am wirtschaftlichsten nach kontinuierlichen Polymerisationsverfahren erfolgt, wie sie in der DE-A 34 20 168 und der DE-A 35 12 564 beschrieben sind, stellt die sich anschließende diskontinuierliche Dispergierung einen Engpaß dar, der einen negativen Einfluß auf die Wirtschaftlichkeit des Gesamtverfahrens ausübt. Außerdem unterliegen die nach diesem Verfahren hergestellten wäßrigen Wachsdispersionen, wie bei Chargenherstellung unvermeidbar, mehr oder weniger starken Qualitätsschwankungen, die vornehmlich durch unterschiedliche Qualitäten der Einsatzstoffe und auch durch Schwankungen der Reaktionsbedingungen hervorgerufen werden.

Der Erfindung lag daher die Aufgabe zugrunde, ein Verfahren zu finden, das die wäßrigen Wachsdispersionen in gleichbleibender Produktqualität mit wesentlich kürzeren Reaktionszeiten als im Emulgier-Autoklaven liefert.

Demgemäß wurde ein Verfahren zur Herstellung von wäßrigen Synthesewachsdispersionen, die als wesentlichen Bestandteil in der Festsubstanz teilweise oder vollständig neutralisierte Copolymere (I) enthalten, die aus

A) $C_2$- bis $C_4$-Olefinen und

B) ungesättigten Mono- oder Dicarbonsäuren oder Dicarbonsäureanhydriden oder Gemischen dieser Monomeren aufgebaut sind, durch Neutralisieren und Dispergieren der Festsubstanz in wäßrigem Medium oberhalb des Schmelzpunktes der Copolymeren (I) gefunden, welches dadurch gekennzeichnet ist, daß man die Vorgänge des Neutralisierens und des Dispergierens in einem oder mehreren hintereinandergeschalteten Extrudern vornimmt.

Dieses Vorgehen entspricht einer kontinuierlichen Arbeitsweise. Hierbei ist es bemerkenswert, daß die Neutralisierung in einem Extruder auch bei Verweilzeiten von nur einigen Minuten quantitativ abläuft und daß diese Zeitspanne außerdem ausreicht, um die gewünschten feinteiligen und gleichmäßigen Dispersionen zu erhalten.

Unter Extrudieren ist nach Römpps Chemie-Lexikon, 8. Aufl., 1981, Bd. 2, S. 1230 ein auch Strangpressen genanntes Verfahren zur Herstellung von Rohren, Fäden, Profilen, Schläuchen usw. aus thermoplastischen Kunststoffen zu verstehen. Die ursprünglich für diesen Zweck entwickelten Apparate werden als Extruder bezeichnet, sie können aber auch auf anderen Gebieten als der Kunststoffverarbeitung eingesetzt werden.

Extruder sind fördernde Ein- oder Mehrwellenmischer. Da ihre Wirkungsweise auf das Prinzip der archimedischen Schraube zurückzuführen ist, werden sie oft auch als Schneckenmaschinen oder Schneckenpressen bezeichnet. Ullmanns Encyklopädie der technischen Chemie, 4. Aufl., 1972, Bd. 2, S. 295-299 führt als übergreifenden Begriff die Bezeichnung Kontinue-Mischer bzw. -Kneter ein. Alle dort aufgeführten Extruder-Typen (mit Ausnahme der im offenen Trog arbeitenden Holo-Flite-Doppelschnecken) können für das erfindungsgemäße Verfahren benutzt werden.

Im einzelnen sind folgende in Ullmann loc.cit. näher erläuterten Extruder-Typen zu nennen: kontinuierliche Einwellenmischer (Extruder im engeren Sinne) wie der Frenkel-Mischer, der Plastifikator, der Votator oder der Ko-Kneter, kontinuierliche gleichläufige Zweiwellenmischer wie die Colombo-Schnecken oder die ZSK-Schnecken, kontinuierliche gegenläufige Zweiwellenmischer wie die Leistritz-Knetpumpe, die Pasquetti-Doppelschnekke, die Cotruder-Schnecken, die Kestermann-Doppelschnecke, die Mapré-Doppelschnecke, die Getecha-Knetstrangpresse, die Welding-Engineers-Maschine, der Anger-Tandem-Extruder oder der Zimmermann-Jansen-Extruder, Zweiwellen-Durchlaufkneter wie der Eck-Mixtruder, der DSM-Mischer, der FCM-Kneter oder das List-Allphasen-Gerät, sowie kontinuierliche Mehrwellengeräte wie der Vierschnecken-Extruder oder der Planetwalzen-Extruder.

Im erfindungsgemäßen Verfahren werden kontinuierliche Zweiwellenmischer bevorzugt, und zwar besonders gleichsinnig laufende kontinuierliche Zweiwellenmischer wie die ZSK-Typen der Firma Werner & Pfleiderer oder die ZE-Extruder der Firma Berstorff.

Das erfindungsgemäße Verfahren gestattet mehrere Ausführungsformen unter Zuhilfenahme eines oder mehrerer hintereinandergeschalteter Extruder. In der grundlegenden Ausführungsform wird das Copolymerisat (I) als Granulat in den gekühlten, vorteilhafterweise mit Stickstoff überströmten Einzug der Aufgabezone eindosiert und bei Extrudergehäusetemperaturen oberhalb des Schmelzpunktes des Copolymerisats (I), vorzugsweise 5 bis 50°C oberhalb des Schmelzpunktes von I, mit Hilfe von beispielsweise Knetelementen, Rückförderelementen, Zahnscheiben und/oder Drosseln aufgeschmolzen. Die Eindosierung des Neutralisationsmittels in die Polymerschmelze erfolgt bei festen Neutralisationsmitteln am vorteilhaftesten in den Einzug der Aufgabezone; bei flüssigen Neutralisationsmitteln wird als Ort der Zugabe eine Zone reduzierten Druckes bevorzugt, jedoch kann die Zugabe auch in den Einzug der Aufgabezone erfolgen. Der Neutralisationszone schließt sich im Extruder die Dispergierzone an. Dort wird die gewünschte Menge Wasser zudosiert, wobei als Ort der Zugabe des Dispergiermittels eine Zone reduzierten Drucks bevorzugt wird. Die Zugabe von weiteren wachsartigen Fest stoffkomponenten in geschmolzener oder dispergierter Form und/oder von Hilfsmitteln erfolgt ebenfalls vorzugsweise in einer Zone reduzierten Druckes oder in den Einzug der Aufgabezone.

In einer Abwandlung der beschriebenen Ausführungsform können das Neutralisations- und das Dispergiermittel auch gemeinsam in den Einzug der Aufgabezone eindosiert werden. Hierbei sind Neutralisations- und Dispergierzone im Extruder nicht mehr räumlich voneinander getrennt.

Besonders bevorzugt aber ist die Ausführungsform, bei der man die Neutralisierung und die Dispergierung in einem Schritt direkt in demjenigen Extruder vornimmt, mit welchem das Copolymere (I) im Anschluß an seine Herstellung aus dem Polymerisationsreaktor ausgetragen wird. Dies ist nicht nur wirtschaftlich äußerst vorteilhaft, sondern macht auch ein erneutes Aufschmelzen der Copolymerisate (I) überflüssig, was Energie einspart und eine zusätzliche thermische und mechanische Belastung von I vermeidet. Der Austragsextruder des Polymerisationsreaktors ist kein spezieller Konstruktionstyp, sondern nur durch seine Funktion als Austragsaggregat im Gegensatz zu den unabhängig betreibbaren Reaktionsextrudern bestimmt.

Man kann auch den Dispergiervorgang in einem zweiten Extruder vornehmen, der dem für die Neutralisierung verwendeten Extruder nachgeschaltet ist. Beim ersten Extruder kann es sich hierbei um den Austragsextruder des Polymerisationsreaktors handeln.

Die im Inneren der für das erfindungsgemäße Verfahren verwendbaren Extruder eingestellten Temperaturen liegen üblicherweise im Bereich von 70 bis 200°C, wobei man vorzugsweise unter Eigendruck - etwa im Bereich von 1 bis 40 bar - arbeitet.

Die erfindungsgemäß verwendeten Copolymere (I) und die daraus herstellbaren E-AS-Wachse und ihre wäßrigen Dispersionen sind in der DE-A 34 20 168 und in der DE-A 35 12 564 im wesentlichen beschrieben.

Für den Aufbau der Copolymeren (I) eignen sich als Komponente A Ethylen, Propylen, 1-Buten, 2-Buten, Isobuten oder Gemische dieser Olefine; bevorzugt wird Ethylen. Als Komponente B können beispielsweise Acrylsäure, Methacrylsäure, Crotonsäure, Isocrotonsäure, Vinylessigsäure, Maleinsäure, Maleinsäureanhydrid, Fumarsäure, Itaconsäure, Itaconsäureanhydrid oder Gemische dieser Monomeren verwendet werden; bevorzugt werden davon Acrylsäure, Methacrylsäure oder Mischungen dieser beiden Monomeren.

Die carboxylgruppenhaltigen Ethylencopolymerisate sind vorzugsweise aus 75 bis 95 Gew.% Ethylen und 5 bis 25 Gew.% der Komponente B, bezogen auf die Säureform der Copolymere (I), aufgebaut. Besonders bevorzugt werden Zusammensetzungen von 78 bis 88 Gew.% Ethylen und 12 bis 22 Gew.% der Komponente B. Die Ethylencopolymerisate haben in der Regel in der Säureform eine Schmelzviskosität von wenigstens 1000 mm²/s, gemessen bei 20°C, als untere Grenze und einen Melt-Flow-Index (MFI) von wenigstens 1 g/10 min, gemessen bei 125°C und 325 g, als obere Grenze.

Die Schmelzpunkte der Copolymere (I) liegen in der Regel zwischen 70 und 105°C; bevorzugt werden Polymere mit Schmelzpunkten zwischen 75 und 90°C.

Geeignete Basen zur Neutralisierung der Copolymere (I) sind beispielsweise Natrium- oder Kaliumhydroxid in fester Form oder als Lösung, Ammoniak oder ein gegebenenfalls durch eine oder mehrere Hydroxylgruppen substituiertes Alkylamin oder Mischungen der genannten Verbindungen. Als Alkylamine kommen insbesondere Diethanolamin, Triethanolamin, Triisopropanolamin, 2-Amino-2-methylpropanol, Dimethylethanolamin und Diethylethanolamin in Betracht. Die Neutralisierung der Copolymere erfolgt in der Regel zu 30 bis 100 %.

Als weitere wachsartige Feststoffkomponenten können Polyethylenoxidatwachse, Polyethylenwachse und/oder Paraffine in einer Menge von zusammen bis zu 80 Gew.% bezogen auf die Gesamtmenge der Festsubstanz der Dispersion, zugesetzt werden. Typische Polyethylenoxidatwachse, die für das erfindungsgemäße Verfahren geeignet sind, haben in der Regel eine Säurezahl von 18 bis 25 und ein Molekulargewicht von 2000 bis 10.000. Sie können teilweise oder vollständig neutralisiert eingesetzt oder während des erfindungsgemäßen Verfahrens teilweise oder vollständig neutralisiert werden. Die verwendbaren Polyethylenwachse weisen vorzugsweise ein Molekulargewicht von 500 bis 6000 und einen Schmelzpunkt von 40 bis 110°C auf und die verwendbaren Paraffine haben vorzugsweise einen Schmelzpunkt von 40 bis 100°C.

Zweckmäßigerweise können den wäßrigen Synthesewachsdispersionen oder den diesen zugrundeliegenden Komponenten an sich übliche Hilfsmittel in geringen Mengen zugesetzt werden. Als Hilfsmittel kommen Tenside, ionische oder nichtionische Emulgatoren, Entschäumer wie Ethylenoxid- oder Propylenoxid-Blockpolymere von Fettalkoholen, Diolen, Triolen und Ethylendiaminen, Verlaufsmittel wie fluorhaltige Tenside, beispielsweise das Kaliumsalz des N-Ethyl-N-perfluoroctansulfonylglycins, Korrosionsschutzmittel, beispielsweise N-(2-Ethylhexyl)bernsteinsäurehalbamid, N-(2-Ethylhexyl)phthalsäurehalbamid, Phenylsulfonylamidocapronsäure, Diisobutenyl bernsteinsäure oder Medialansäure, und/oder permanente oder temporäre Weichmacher, beispielsweise Methyldiglykol oder Tributoxyethylphosphat, in Betracht.

Als Dispergiermittel für die E-AS-Wachse werden vorzugsweise Wasser oder auch Gemische aus Wasser und einem oder mehreren Alkoholen verwendet. Der Feststoffgehalt der Synthesewachsdispersionen liegt vorzugsweise im Bereich von 10 bis 65 Gew.% und die mittlere Teilchengröße in der Regel zwischen 0,05 und 0,3 μm.

Das erfindungsgemäße Verfahren zeichnet sich durch gleichbleibende Produktqualität der erhaltenen wäßrigen Synthesewachsdispersionen und vor allem durch die Zeitersparnis bei der kontinuierlichen Verfahrensweise des Extruders aus. Im Gegensatz zum diskontinuierlichen Autoklavenverfahren, bei dem die gewünschten feinteiligen und gleichmäßigen Dispersionen der E-AS-Wachse erst nach frühestens 1 Stunde erhalten werden, beträgt die Verweilzeit im Extruder nur wenige Minuten, in vielen Fällen 2 Minuten sogar nur oder noch weniger.

Beispiele

In den folgenden Beispielen 1 bis 4 wurde jeweils ein gleichläufiger Zweiwellen-Extruder (Typ ZSK 57 der Fa. Werner & Pfleiderer) verwendet, dessen Mischstrecke 1,50 m lang war und der einen Durchmesser von 5,7 cm hatte. Im Beispiel 5 wurde ein gleichläufiger Zweiwellen-Extruder (Typ ZSK 90 der Fa. Werner & Pfleiderer) benutzt, dessen Mischstrecke 1,40 m lang war und der einen Durchmesser von 9,0 cm hatte.

Beispiel 1

Pro Stunde wurden 35 kg eines E-AS-Wachses in Granulatform aus 79 Gew.% Ethylen und 21 Gew.% Acrylsäure mit einem Schmelzpunkt von 84°C und einem MFI von 3 g/10 min (gemessen bei 125°C und 325 g) in den mit Stickstoff überlagerten Einzug der Aufgabezone des Extruders eindosiert und dort bei 110°C aufgeschmolzen. Nach einer Aufschmelzstrecke von 0,50 m wurden stündlich 6,25 kg einer 25 gew.%igen wäßrigen Ammoniaklösung eingepumpt; der Druck im Extruder lag an dieser Stelle bei ca. 2 bar, wobei der höchste Druck im Extruder ca. 30 bar betrug. In der nachfolgenden Neutralisationszone wurde eine Temperatur von 100°C eingestellt; die höchste Temperatur im Extruder betrug 140°C. Nach einer Mischstrecke von 0,85 m (gemessen ab der Aufgabezone) wurden stündlich 99 kg auf 90°C vorgewärmtes Wasser eingepumpt; der Druck im Extruder lag an dieser Stelle bei ca. 4 bar. Die aus dem Extruder ausgetragene homogene Dispersion hatte eine mittlere Teilchengröße von 0,1 μm. Die mittlere Verweilzeit im Extruder betrug 2 min.

Die hergestellte Dispersion eignet sich hervorragend zur Konservierung von Lackschichten sowie zur Herstellung von Fußbodenpflegemitteln.

Beispiel 2

Es wurde wie in Beispiel 1 verfahren, zusätzlich wurden pro Stunde 140 kg eines Paraffins mit einem Schmelzbereich von 44 bis 46°C und einem Molekulargewicht von 6000 in geschmolzener Form in die Aufgabezone des Extruders eindosiert. Das Paraffin enthielt 0,25 Gew.% eines fluorhaltigen Tensids als Verlaufmittel. Die erhaltene homogene Dispersion hatte eine mittlere Teilchengröße von 0,25 μm. Die mittlere Verweilzeit im Extruder betrug 2 min.

Die hergestellte Dispersion eignet sich hervorragend zum Konservieren von lackierten Metallen gegen Korrosion.

Beispiel 3

Pro Stunde wurden 50 kg eines E-MAS-Wachses in Granulatform aus 76 Gew.% Ethylen und 24 Gew.% Methacrylsäure mit einem Schmelzpunkt von 79°C und einem MFI von 3 g/10 min (gemessen bei 150°C und 325 g) zusammen mit stündlich 5,5 kg Natriumhydroxid in Plätzchenform in den mit Stickstoff überlagerten Einzug der Aufgabezone des Extruders eindosiert und dort bei 110°C aufgeschmolzen. Nach einer Aufschmelzstrecke von 0,50 m wurden stündlich 5 kg Wasser eingepumpt; der Druck im Extruder lag an dieser Stelle bei ca. 2 bar, wobei der höchste Druck im Extruder ca. 25 bar betrug. In der nachfolgenden Neutralisationszone wurde eine Temperatur von 100°C eingestellt; die höchste Temperatur im Extruder betrug 140°C. Nach einer Mischstrecke von 0,85 m (gemessen ab der Aufgabezone) wurden pro Stunde 139,5 kg auf 90°C vorgewärmtes Wasser eingepumpt; der Druck im Extruder lag an dieser Stelle bei ca. 3,5 bar. Die aus dem Extruder ausgetragene homogene Dispersion hatte eine mittlere Teilchengröße von 0,15 μm. Die mittlere Verweilzeit im Extruder betrug 2 min.

Die hergestellte Dispersion eignet sich hervorragend zur Konservierung von Lackschichten sowie von Fußbodenbelägen.

Beispiel 4

Es wurde wie in Beispiel 1 verfahren, jedoch mit der Abänderung, daß zur Neutralisierung statt der wäßrigen Ammoniaklösung Dimethylethanolamin in einer Menge von 9 kg pro Stunde eingesetzt wurden. Die erhaltene homogene Dispersion hatte eine mittlere Teilchengröße von 0,08 μm. Die mittlere Verweilzeit im Extruder betrug 2 min.

Die hergestellte Dispersion eignet sich hervorragend zur Konservierung von Lackschichten sowie von Fußbodenbelägen.

Beispiel 5

In den Einzug der Aufgabezone des Austragsextruders eines kontinuierlich arbeitenden Hochdruckpolymerisationsreaktors wurden pro Stunde 144 kg Polymerschmelze eines E-AS-Wachses aus 80 Gew.% Ethylen und 20 Gew.% Acrylsäure mit einer Temperatur von 180°C aus dem Produktabscheider des Reaktors eindosiert. Nach einer Mischstrecke von 0,25 m wurden stündlich 35 kg Dimethylethanolamin eingepumpt; der Druck im Extruder lag an dieser Stelle bei ca. 1,5 bar, wobei der höchste Druck im Extruder ca. 30 bar betrug. In der nachfolgenden Neutralisationszone wurde eine Temperatur von 100°C eingestellt; die höchste Temperatur im Extruder betrug 140°C. Nach einer Mischstrecke von 0,45 m (gemessen ab der Aufgabezone) wurden stündlich 400 kg auf 90°C vorgewärmtes Wasser eingepumpt; der Druck im Extruder lag an dieser Stelle bei ca. 3,5 bar. Die aus dem Extruder ausgetragene homogene Dispersion hatte eine mittlere Teilchengröße von 0,11 μm. Die mittlere Verweilzeit im Extruder betrug 1,5 min.

Die hergestellte Dispersion eignet sich hervorragend zur Konservierung von Lackschichten sowie von Fußbodenbelägen.

**Ansprüche**

1. Verfahren zur Herstellung von wäßrigen Synthesewachsdispersionen, die als wesentlichen Bestandteil in der Festsubstanz teilweise oder vollständig neutralisierte Copolymere (I) enthalten, die aus

A) C$_2$- bis C$_4$-Olefinen und

B) ungesättigten Mono- oder Dicarbonsäuren oder Dicarbonsäureanhydriden oder Gemischen dieser Monomeren

aufgebaut sind, durch Neutralisieren und Dispergieren der Festsubstanz in wäßrigem Medium oberhalb des Schmelzpunktes der Copolymeren (I), dadurch gekennzeichnet, daß man die Vorgänge des Neutralisierens und des Dispergierens in einem oder mehreren hintereinandergeschalteten Extrudern vornimmt.

2. Verfahren nach Anspruch 1, dadurch gekennzeichnet, daß man die Herstellung der Dispersion in demjenigen Extruder vornimmt, mit welchem das Copolymere (I) im Anschluß an seine Herstellung aus dem Polymerisationsreaktor ausgetragen wird, wobei weitere Feststoffkomponenten und/oder Hilfsmittel eingearbeitet werden können.

3. Verfahren nach Anspruch 1 oder 2, dadurch gekennzeichnet, daß das Copolymere (I) aus 75 bis 95 Gew.% Ethylen als Komponente A und 5 bis 25 Gew.% der Komponente B, bezogen auf die Säureform von I, aufgebaut ist.

4. Verfahren nach den Ansprüchen 1 bis 3, dadurch gekennzeichnet, daß die Copolymere (I) einen Schmelzpunkt zwischen 70 und 105°C haben.

5. Verfahren nach den Ansprüchen 1 bis 4, dadurch gekennzeichnet, daß die Festsubstanz der Dispersion neben den definitionsgemäßen Copolymeren (I) zusammen bis zu 80 Gew.% Polyethylenoxidatwachs, Polyethylenwachs und/oder Paraffin, bezogen auf die Gesamtmenge der Festsubstanz der Dispersion, enthalten kann.